# EUROPEAN PATENT SPECIFICATION

(11) **EP 4 148 856 B1**
(45) Date of publication and mention of the grant of the patent: **08.10.2025**
(21) Application number: 22813868.1
(22) Date of filing: 16.03.2022
(51) Int. Cl.: H01M 10/058, H01M 10/44, H01M 10/052, H01M 10/0567, H01M 4/04

(54) **METHOD OF PRODUCING LITHIUM SECONDARY BATTERY**
VERFAHREN ZUR PRODUKTION EINER LITHIUMSEKUNDÄRBATTERIE
PROCÉDÉ DE PRODUCTION DE BATTERIE RECHARGEABLE AU LITHIUM

(30) Priority: 14.06.2021 KR 20210076579
(43) Date of publication of application: 15.03.2023
(73) Proprietor: LG Energy Solution, Ltd., Seoul 07335 (KR)
(72) Inventor: HWANG, Gyu Ok, Yuseong-Gu, Daejeon 34122 (KR)
(74) Representative: Goddar, Heinz J.
(86) International application number: PCT/KR2022/003676
(87) International publication number: WO 2022/265187

(56) References cited:
- CN-A- 110 690 509
- CN-A- 111 554 991
- CN-A- 111 682 272
- CN-B- 101 315 994
- JP-A- 2021 044 173
- KR-A- 20160 038 600
- KR-A- 20210 027 111
- KR-A- 20210 060 825
- KR-B1- 102 200 911
- US-A1- 2014 322 579

## Description

### [Technical Field]

The present invention relates to a method of producing a lithium secondary battery for reducing the generation of gas during an activation process, and a lithium secondary battery produced thereby.

More specifically, the present invention relates to a method of producing a lithium secondary battery, which is intended to minimize an amount of activation gas generated by a reaction between a solvent of an electrolyte and an electrode by uniformly and stably forming a solid electrolyte interface (SEI) film by improving an electrolyte injection process and a primary charging process in the production of a lithium secondary battery.

### [Background Art]

As the technology for mobile devices is developed and the demand for mobile devices increases, the demand for secondary batteries as a power source is rapidly increasing, and among secondary batteries, lithium secondary batteries having a high energy density, a high action potential, a long cycle lifespan, and a low self-discharge rate have been commercialized and widely used.

As interest in environmental issues has increased in recent years, many studies have been conducted on electric vehicles (EVs), hybrid electric vehicles (HEVs), and the like which are able to replace vehicles using fossil fuels, such as gasoline and diesel vehicles, which are one of the main causes of air pollution.

Although nickel-metal hydride (Ni-MH) secondary batteries have been mainly used as a power source of the EVs, HEVs, and the like, studies on the use of lithium secondary batteries having a high energy density, high discharge voltage, and output stability are being actively conducted, and some of them have been commercialized.

The lithium secondary battery is a battery composed of a positive electrode, a negative electrode, an electrolyte that provides the migration path of lithium ions between the positive electrode and the negative electrode, and a separator, and charging and discharging proceed by repeating a process of intercalating and deintercalating lithium ions from a lithium metal oxide of the positive electrode to a carbon-based negative electrode. In this case, lithium reacts with the carbon electrode due to having high reactivity to produce Li₂CO₃, LiO, LiOH, or the like, and thus a film is formed on the surface of the negative electrode. This film is referred to as a solid electrolyte interface (SEI) film, and a SEI film formed during initial charging prevents a reaction of lithium ions with the carbon negative electrode or other materials during charging and discharging. Also, the SEI film acts as an ion tunnel to allow only lithium ions to pass through. The ion tunnel serves to solvate lithium ions and thus prevent the collapse of a structure of the carbon negative electrode due to the co-intercalation of the lithium ion and an organic solvent, which is contained in an electrolyte, have a high molecular weight, and move along with the lithium ions, to the carbon negative electrode.

Therefore, in order to enhance the high-temperature cycle characteristics and low-temperature output characteristics of lithium secondary batteries, it is necessary to form a robust SEI film on the negative electrode of lithium secondary batteries.

However, there is a problem in that an organic solvent in an electrolyte reacts with the surface of an electrode, for example, a negative electrode, during initial charging in an activation process to generate gas. The generated gas is trapped inside a battery to cause capacity degradation and lithium precipitation. Also, since the gas is generated or consumed by an additional reaction during an aging process, it is important to minimize a gas generation amount during initial charging.

In addition, the SEI film formed during initial charging may not be stably maintained or uniformly formed according to charging conditions. When the SEI film is not stabilized, an organic solvent in an electrolyte reacts with an electrode again to generate gas, repeating the vicious cycle.

Therefore, there is a need to develop a technology that is capable of minimizing gas generation while forming a uniform and robust SEI film.

### [Related-Art Documents]

### [Patent Documents]

Korean Laid-Open Patent Publication No. 10-2017-0034774
US 2014/322 579 A1 provides a method for producing a nonaqueous electrolyte secondary battery in which the drop in capacity retention rate is controlled by forming a coating in a more favorable state on the surface of the negative electrode active material. This production method comprises a step of preparing a battery assembly in which an electrode assembly is housed within a battery case, the electrode assembly including a positive electrode produced by forming a positive electrode active material layer containing at least a positive electrode active material, and a negative electrode produced by forming a negative electrode active material layer containing at least a negative electrode active material; a first injection step of injecting a nonaqueous electrolyte containing a specified additive into the battery case; a precharging step of forming the additive-derived coating on the surface of the negative electrode active material; a second injection step of injecting a nonaqueous electrolyte not containing an additive into the battery case; and a charge and discharge step of charging and discharging the battery assembly to a predetermined charging and discharge voltage.

CN 101 315 994 B provides a formation method used for a lithium ion secondary battery. The method comprises the following steps that: electrolyte is injected into the lithium ion secondary battery and then aged; subsequently, the lithium ion secondary battery is charged; the charging method comprises a first charging process and a second charging process; after the first charging process is completed, the electrolyte is injected into the lithium ion secondary battery again; the injected electrolyte before the first charging process and the electrolyte which is injected into the lithium ion secondary battery after the first charging process respectively and independently are mixed solution which contains the electrolyte lithium salt and a chainshaped acid ester; wherein, the electrolyte injected into the lithium ion secondary battery before the first charging process also contains a film-forming additive; the electrolyte which is injected into the lithium ion secondary battery again after the first charging process also contains an overcharging additive.

CN 110 690 509 A provides an opening formation method of a lithium ion battery. According to the method, the liquid injection port of the battery is always kept open in the formation stage, and the stability of the SEI film of the battery is improved by adjusting the formation pressure and controlling the component change of the electrolyte, so that the cycle performance of the battery is improved.

CN 111 554 991 A discloses a negative pressure formation method and a battery. The method comprises the following steps: vacuumizing, charging and standing a semi-finished battery cell to obtain a formed battery cell; performing vacuumizing and charging in multiple steps, gradually reducing the vacuum degree of each step, and gradually increasing the charging current.

CN 111 682 272 A discloses a lithium ion battery formation method and a lithium ion battery. The lithium ion battery formation method comprises the following steps: providing a lithium ion battery semi-finished product into which an electrolyte is injected, and carrying out first standing operation on the lithium ion battery semi-finished product; carrying out pressurization operation on the lithium ion battery semi-finished product after the first standing; wherein the charging current of the multiple times of charging operation is gradually increased, the charging current is 0.1-1.5 C, the charging frequency is greater than or equal to 3, and the current difference value of the two times of charging operation is 0.05-1.0 C; and carrying out secondary standing operation on the intermediate product of the lithium ion battery, and then carrying out exhausting and packaging operation to complete formation operation..

### [Disclosure]

### [Technical Problem]

One object of the present invention is to provide a method of producing a lithium secondary battery, which is capable of reducing a gas generation amount by stably forming a SEI film by improving an electrolyte injection process and a primary charging process in production of a lithium secondary battery.

Another object of the present invention is to provide a lithium secondary battery produced by the above-described method of producing a lithium secondary battery.

### [Technical Solution]

**In** order to solve the above problem, one aspect of the present invention provides a method of producing a lithium secondary battery, which includes:
(a) injecting a first electrolyte including an additive for forming a solid electrolyte interface (SEI) film into a battery cell in which an electrode assembly including a positive electrode, a negative electrode, and a separator interposed between the positive electrode and the negative electrode is accommodated in a battery case;
(b) pre-aging the battery cell containing the first electrolyte injected thereinto;
(c) primary charging the pre-aged battery cell so that a predetermined state of charge (SOC) is reached to activate the battery cell;
(d) degassing the primary charged battery cell to remove gas inside the battery cell; and
(e) injecting a second electrolyte not including the additive for forming a SEI film into the degassed battery cell,

wherein the primary charging includes a stepwise charging process performed by gradually increasing the magnitude of a charging current according to the SOC of the battery cell, and
wherein, in the primary charging, pulse charging and discharging in which charging and discharging are repeated at a predetermined C-rate is performed after the stepwise charging process or between specific steps of the stepwise charging process.

Another aspect of the present invention provides a lithium secondary battery produced by the above-described method.

### [Advantageous Effects]

According to a method of producing a lithium secondary battery of the present invention, a SEI film is stably formed due to an additive for forming a SEI film in injection of a first electrolyte so as to suppress a reaction between an organic solvent and an electrode in injection of a second electrolyte, and thus the generation of gas due to the reaction can be minimized.

In addition, the method allows a SEI film to be more easily formed by a stepwise charging process of gradually increasing the magnitude of a charging current or a stepwise charging & pulse charging and discharging in primary charging after injection of a first electrolyte, and also allows the formed SEI film to be stabilized, and thus gas generated during an activation process can be further reduced, and the resistance of a final battery cell produced by the method can be reduced.

### [Brief Description of the Drawings]

FIG. 1 is a flowchart showing a method of producing a lithium secondary battery according to an embodiment of the present invention.
FIG. 2 is a graph showing an example of primary charging of a step (c) in a method of producing a lithium secondary battery according to an embodiment of the present invention.
FIG. 3 is a graph showing the comparison of gas generation amounts of lithium secondary batteries produced according to Examples 1 and 2 of the present invention and Comparative Example 1.
FIG. 4 is a graph showing the comparison of maximum gas generation amounts of Examples 1 and 2 and Comparative Example 1.
FIG. 5 is a graph showing the impedance measurement data for each frequency of final battery cells produced according to Examples 1 and 2 and Comparative Example 1.

### [Detailed Description of the Preferred Embodiments]

Hereinafter, the present invention will be described in further detail to help in understanding the present invention.

Terms and words used in this specification and the claims should not be interpreted as being limited to commonly used meanings or meanings in dictionaries and should be interpreted with meanings and concepts which are consistent with the technological scope of the present invention based on the principle that the inventors can appropriately define concepts of terms in order to describe the invention in the best way.

A method of producing a lithium secondary battery according to the present invention includes: (a) injecting a first electrolyte including an additive for forming a solid electrolyte interface (SEI) film into a battery cell in which an electrode assembly including a positive electrode, a negative electrode, and a separator interposed between the positive electrode and the negative electrode is accommodated in a battery case; (b) pre-aging the battery cell containing the first electrolyte injected thereinto; (c) primary charging the pre-aged battery cell so that a predetermined state of charge (SOC) is reached to activate the battery cell; (d) degassing the primary charged battery cell to remove gas inside the battery cell; and (e) injecting a second electrolyte not including the additive for forming a SEI film into the degassed battery cell, wherein the primary charging includes a stepwise charging process performed by gradually increasing the magnitude of a charging current according to the SOC of the battery cell, and wherein, in the primary charging, pulse charging and discharging in which charging and discharging are repeated at a predetermined C-rate is performed after the stepwise charging process or between specific steps of the stepwise charging process.

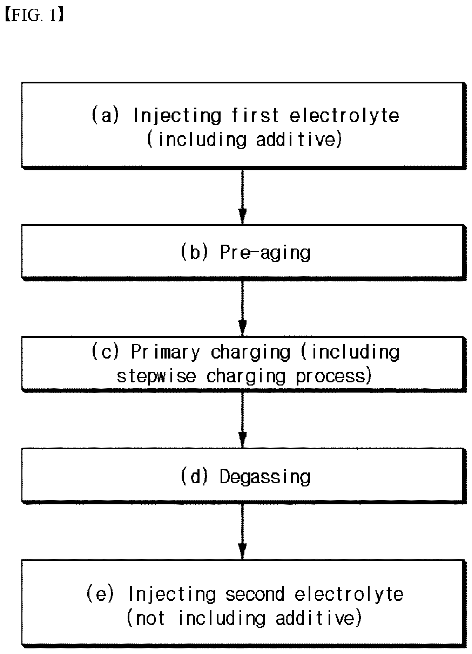

FIG. 1 is a flowchart showing a method of producing a lithium secondary battery according to an embodiment of the present invention.

Hereinafter, each step will be described in further detail with reference to FIG. 1.

First, in step (a), a first electrolyte including an additive for forming a SEI film is injected into a battery cell in which an electrode assembly including a positive electrode, a negative electrode, and a separator interposed between the positive electrode and the negative electrode is accommodated in a battery case.

The electrode assembly may be manufactured by a method typically known in the art.

The positive electrode in the electrode assembly has a structure in which a positive electrode mixture layer is stacked on one surface or both surfaces of an electrode current collector. As one example, the positive electrode mixture layer includes a conductive material, a binder polymer, and the like in addition to a positive electrode active material, and a positive electrode additive typically used in the art may be further included as necessary.

The positive electrode active material may be a lithium-containing oxide, and the same or different positive electrode active materials may be used. As the lithium-containing oxide, a lithium-containing transition metal oxide may be used.

For example, the lithium-containing transition metal oxide may be any one or a mixture of two or more selected from the group consisting of LiₓCoO₂ (0.5<x<1.3), LiₓNiO₂ (0.5<x<1.3), LiₓMnO₂ (0.5<x<1.3), LiₓMn₂O₄ (0.5<x<1.3), Liₓ(NiₐCo_{b}Mn_{c})O₂ (0.5<x<1.3, 0<a<1, 0<b<1, 0<c<1, a+b+c=1), LiₓNi_{1-y}Co_{y}O₂ (0.5<x<1.3, 0<y<1), LiₓCo_{1-y}Mn_{y}O₂ (0.5<x<1.3, 0≤y<1), LiₓNi_{1-y}Mn_{y}O₂ (0.5<x<1.3, 0≤y<1), Liₓ(NiₐCo_{b}Mnₑ)O₄ (0.5<x<1.3, 0<a<2, 0<b<2, 0<c<2, a+b+c=2), LiₓMn_{2-z}Ni_{z}O₄ (0.5<x<1.3, 0<z<2), LiₓMn_{2-z}Co_{z}O₄ (0.5<x<1.3, 0<z<2), LiₓCoPO₄ (0.5<x<1.3), and LiₓFePO₄ (0.5<x<1.3) , but the present invention is not limited thereto. Also, the lithium-containing transition metal oxide may be coated with a metal such as aluminum (Al) or a metal oxide. Also, in addition to the lithium-containing transition metal oxide, one or more of sulfides, selenides, and halides may be used.

A current collector used in the positive electrode may be used without limitation as long as it is a metal with high conductivity, to which a positive electrode active material slurry is able to be easily adhered and which has no reactivity in the voltage range of a secondary battery. For example, copper, stainless steel, aluminum, nickel, titanium, calcined carbon, copper or stainless steel whose surface has been treated with carbon, nickel, titanium, silver, or the like, an aluminum-cadmium alloy, or the like may be used. The current collector may be used in any of various forms such as a film, a sheet, a foil, a net, a porous material, a foam, and a non-woven fabric and have a thickness of 3 to 500 µm.

Examples of a solvent for forming the positive electrode include water and an organic solvent such as N-methyl pyrrolidone (NMP), dimethylformamide (DMF), acetone, dimethylacetamide, and the like, and these solvents may be used alone or in combination of two or more thereof. The solvent is used in an amount sufficient to dissolve and disperse the positive electrode active material, the binder, and the conductive material in consideration of the thickness of an applied slurry and manufacturing yield.

As the binder, various types of binder polymers such as polyvinylidene fluoride-cohexafluoropropylene (PVDF-co-HFP), polyvinylidene fluoride, polyacrylonitrile, polymethyl methacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluoro-rubber, polyacrylic acid, a polymer whose hydrogens have been substituted with Li, Na, Ca, or the like, and various copolymers thereof may be used.

The conductive material is not particularly limited as long as it does not cause a chemical change in the battery and has conductivity. For example, graphite such as natural graphite, artificial graphite, or the like; carbon black such as acetylene black, Ketjen black, channel black, furnace black, lamp black, thermal black, or the like; a conductive fiber such as carbon fiber, metal fiber, or the like; a conductive tube such as carbon nanotubes or the like; fluorocarbon powder; metal powder such as aluminum powder, nickel powder, or the like; a conductive whisker such as zinc oxide, potassium titanate, or the like; a conductive metal oxide such as titanium oxide or the like; or a conductive material such as a polyphenylene derivative or the like may be used. The conductive material may be used in an amount of 1 wt% to 20 wt% with respect to the total weight of the positive electrode slurry.

The negative electrode has a structure in which a negative electrode active material layer is stacked on one surface or both surfaces of a negative electrode current collector. As one example, the negative electrode active material layer includes a negative electrode active material, a conductive material, a binder polymer, and the like, and a negative electrode additive typically used in the art may be further included as necessary.

The negative electrode active material may include a carbonaceous material, lithium metal, silicon, tin, or the like. When a carbonaceous material is used as the negative electrode active material, both low-crystallinity carbon and high-crystallinity carbon may be used. Representative examples of the low-crystallinity carbon include soft carbon and hard carbon, and representative examples of the high-crystallinity carbon include natural graphite, Kish graphite, pyrolytic carbon, mesophase pitch-based carbon fiber, meso-carbon microbeads, mesophase pitches, and high-temperature calcined carbon such as petroleum or coal tar pitchderived cokes, and the like.

Non-limiting examples of a current collector used in the negative electrode include a foil made of copper, gold, nickel, a copper alloy, and a combination thereof. Also, the current collector may be used by stacking substrates made of the above-described materials. Specifically, the negative electrode current collector is formed of the above-described metal component and includes a metal plate having a through hole formed in the thickness direction and an ion-conductive porous reinforcing material filled in the through hole of the metal plate.

In addition, the negative electrode may include a conductive material and a binder which are typically used in the art.

As the conductive material, a carbon-based conductive material is mainly used and includes a sphere-type or needle-type carbon-based conductive material. The sphere-type carbon-based conductive material fills the empty space (pore) between active material particles while being mixed with a binder so as to improve physical contact between active materials, thereby reducing interfacial resistance and enhancing adhesion between the lower positive electrode active material and the current collector. Examples of the sphere-type carbon-based conductive material include carbon black including Denka black.

As the binder polymer, any binder typically used in the art may be used without limitation. For example, various types of binders such as polyvinylidene fluoride-cohexafluoropropylene (PVDF-co-HFP), polyvinylidene fluoride (PVDF), polyacrylonitrile, polymethyl methacrylate, styrene butadiene rubber (SBR), carboxymethylcellulose (CMC), and the like may be used.

An amount of the binder polymer is proportional to an amount of the conductive material included in the upper positive electrode active material layer and the lower positive electrode active material layer. This is because the binder polymer is intended to impart adhesion to the conductive material whose particle size is relatively smaller than that of the active material, and thus a larger amount of the binder polymer is required as an amount of the conductive material increases, and a smaller amount of the binder polymer is used as an amount of the conductive material decreases.

As the separator, any separator may be used as long as it is a porous substrate used in a lithium secondary battery. For example, a polyolefin-based porous membrane or a non-woven fabric may be used, but the present invention is not limited thereto. The polyolefin-based porous membrane is, for example, a membrane formed of one or a mixture of polyethylene such as high-density polyethylene, linear low-density polyethylene, low-density polyethylene, and ultra-high-molecular-weight polyethylene, and polyolefin-based polymers such as polypropylene, polybutylene, polypentene, and the like.

Although there is no particular limitation on the thickness of the porous substrate, the thickness may be 5 to 50 µm. Also, although there is no particular limitation on the size and porosity of pores present in the porous substrate, the size and porosity may be 0.01 to 50 µm and 10 to 95%, respectively.

Meanwhile, in order to enhance the mechanical strength of a separator composed of the porous substrate and suppress a short circuit between the positive electrode and the negative electrode, a porous coating layer including inorganic particles and a binder polymer may be further included on at least one surface of the porous substrate.

The electrode assembly manufactured by the above method is inserted in a battery case. The battery case used in the present invention may be a battery case having the appearance of a cylindrical form, a prismatic form, a pouch form, or a coin form, and there is no particular limitation on the appearance thereof. A battery cell in which the electrode assembly is accommodated in the battery case is not a battery cell as a final product but a so-called fresh cell.

An electrolyte to be injected into a lithium secondary battery of the present invention is divided into a first electrolyte including an additive for forming a SEI film and a second electrolyte not including an additive for forming a SEI film, and a predetermined amount of the first electrolyte is injected into a lithium secondary battery in step (a).

The first electrolyte may include a non-aqueous organic solvent and a lithium salt, and since the first electrolyte includes an additive for forming a SEI film, a stable SEI film may be formed on a carbon negative electrode surface in primary charging to be described below due to the additive.

The non-aqueous organic solvent is not limited as long as it is capable of minimizing decomposition caused by an oxidation reaction in a charging/discharging process of a battery and may be, for example, one or a mixture of two or more selected from the group consisting of a cyclic carbonate, a linear carbonate, an ester, an ether, and a ketone.

Among the organic solvents, especially, a carbonate-based organic solvent is preferably used. Examples of the cyclic carbonate include ethylene carbonate (EC), propylene carbonate (PC), and butylene carbonate (BC) and representative examples of the linear carbonate include dimethyl carbonate (DMC), diethyl carbonate (DEC), dipropyl carbonate (DPC), ethyl methyl carbonate (EMC), methyl propyl carbonate (MPC), and ethyl propyl carbonate (EPC).

As the lithium salt, any lithium salt typically used in an electrolyte of a lithium secondary battery, such as LiPF₆, LiAsF₆, LiCF₃SO₃, LiN(CF₃SO₂)₂, LiBF₄, LiBF₆, LiSbF₆, LiN(C₂F₅SO₂)₂, LiAlO₄, LiAlCl₄, LiSO₃CF₃, and LiClO₄, may be used without limitation, and these lithium salts may be used alone or in combination of two or more thereof.

In addition, the first electrolyte includes an additive for forming a SEI film. The inclusion of an additive for forming a SEI film in the first electrolyte is intended to uniformly form a SEI film on the entire surface of an electrode, specifically, a negative electrode, before the injection of a relatively large amount of a second electrolyte. As described below, the additive is decomposed to form a SEI film on an electrode in primary charging after the injection of the first electrolyte. When the SEI film is uniformly and densely formed so as to cover the entire surface of an electrode, even when a second electrolyte is injected, gas generation caused by a reaction between the electrolyte and the electrode can be substantially reduced.

The additive for forming a SEI film may be one or a mixture of two or more selected from the group consisting of vinylene carbonate (VC), vinyl ethylene carbonate (VEC), fluoroethylene carbonate (FEC), cyclic sulfite, saturated sultone, unsaturated sultone, non-cyclic sulfone, lithium oxalyldifluoroborate (LiODFB), and a derivative thereof. Specifically, as a sulfur (S)-based additive, propane sultone (PS), 1-3 propene sultone (PRS), ethylene sulfate (ESa), or the like may be used.

The additive for forming a SEI film is preferably included in an amount of 0.1 to 10 wt% with respect to the total weight of the first electrolyte. When the amount of the additive is less than 0.1 wt%, the effect of the additive is insignificant, and when the amount of the additive exceeds 10 wt%, the additive is decomposed to generate gas.

The first electrolyte is included in an amount sufficient to serve to transfer the additive for forming a SEI film onto an electrode and ensure the wettability of an electrode. Also, when a large amount of the first electrolyte is injected, the electrolyte may react with an electrode to generate a large amount of gas. Therefore, an amount of the first electrolyte may be appropriately determined in view of ensuring electrode wettability and preventing gas generation. That is, the first electrolyte and the second electrolyte may be used in a weight ratio of 20:80 to 40:60, more specifically, 20:80 to 30:70. When the proportion of the first electrolyte is less than 20%, electrode wettability is degraded, and thus it is difficult to perform a smooth charging reaction in primary charging, and when the proportion of the first electrolyte exceeds 40%, gas is generated, and thus the formation of a SEI film is hindered.

Next, in step (b), the battery cell containing the first electrolyte injected thereinto is pre-aged.

The pre-aging is performed to allow the first electrolyte to be sufficiently impregnated into an electrode of the battery cell, that is, to enhance wettability. The pre-aging is performed, for example, at room temperature for 1 to 3 days, but the present invention is not limited thereto. In order to enhance wettability, the pre-aging may be performed at a temperature below and above room temperature (e.g., 25±5 °C), and as a pre-aging temperature increases, a pre-aging time may decrease proportionally thereto. Therefore, the pre-aging temperature and time may be appropriately determined under conditions suitable for impregnation of the first electrolyte in consideration of an amount of the electrolyte.

Next, in step (c), the pre-aged cell is primary charged so that a predetermined state of charge (SOC) is reached to activate the cell (formation). In the present invention, the primary charging is a very important process for stably forming a SEI film and minimizing gas generation in addition to step (a) of including the additive for forming a SEI film. This process stabilizes the structure of the battery cell and makes it usable.

In the primary charging, lithium ions from a positive electrode active material move and are intercalated into a negative electrode active material. In this case, lithium ions react with an electrolyte in a negative electrode due to having high reactivity to produce a compound such as Li₂CO₃, LiO, LiOH, or the like, and the compound forms a SEI film on the negative electrode surface. In this process, the additive for forming a SEI film included in the first electrolyte is decomposed to help the formation of a SEI film on the electrode.

When an SOC increases up to 100% in the primary charging, the capacity of a finally produced battery cell increases. However, since the battery cell of the present invention is a fresh cell, when charging proceeds up to SOC 100% in the primary charging, lithium is precipitated to degrade battery characteristics.

Therefore, charging preferably proceeds up to the most appropriate predetermined SOC in the primary charging in consideration of the capacity of a produced battery cell and prevention of lithium precipitation. For example, the predetermined SOC may be appropriately selected in a range of at most 70%, that is, 70% or less. When an SOC exceeds 70% in the primary charging, lithium precipitation is caused as described above. Therefore, the primary charging preferably proceeds until a maximum SOC value reaches 70% or less.

In the present invention, the primary charging includes a stepwise charging process performed by gradually increasing the magnitude of a charging current according to the SOC of the battery cell. That is, a stepwise charging method in which charging is performed by gradually increasing the magnitude of a charging current according to an SOC value (magnitude) is employed instead of a charging at once by applying a constant current or constant voltage up to SOC 70%. This is intended to stably form a film on a negative electrode by easily decomposing the additive for forming a SEI film included in the first electrolyte. When charging is performed with an excessive SOC or excessive charging current at the beginning, charging may proceed while the additive for forming a SEI film is not completely decomposed, and thus the formed SEI film is not uniform and may be broken. In particular, when charging proceeds at a high charging current in a low SOC range, a gas generation amount increases as described below.

Therefore, the present invention employs a stepwise charging process of gradually increasing the magnitude of a charging current according to the SOC of the battery cell.

A charging current in the stepwise charging process may be selected in a low current range of 0.01 to 0.5C. That is, even when charging current is gradually increased, it is preferable that a maximum charging current does not exceed 0.5C in consideration of the formation and stabilization of a SEI film. Also, when charging proceeds at a low current of 0.01C to 0.5C, the film formation reaction of the additive for forming a SEI film may be sufficiently induced. When charging proceeds at a current below 0.01C, an excessive amount of time is consumed for charging, and therefore, charging in the above low current range is preferred.

In the stepwise charging process, the charging current of a first step, which is the lowest, may be selected in a range of 0.01 to 0.05C. Generally, a carbonate-based or sulfur (S)-based additive for forming a SEI film is easily decomposed in the above low current range of 0.01 to 0.05C. When charging proceeds at a charging current above 0.05C, the additive may be insufficiently decomposed, and thus it is preferable that the charging current of a first step is selected in the above range for a sufficient reaction of the additive.

Meanwhile, a charging pause for stabilizing a SEI film is preferably included at least once between specific steps of the stepwise charging process. The duration of the pause may be appropriately determined according to the type and amount of an additive, the type and amount of an electrolyte, and the like. For example, the pause may last for an appropriate time in a time range of 1 to 10 minutes.

The number of steps in the stepwise charging process may be determined in an appropriate range for film stabilization. For example, the stepwise charging may be performed by gradually increasing a charging current in at least 2 to 3 steps, but the present invention is not limited thereto. The number of times of the pause may also be determined in an appropriate range for film stabilization, and the pause may be included at least once. In principle, there is no limitation at which steps the pause is included between. However, since the pause is intended to stabilize a film, it is necessary to satisfy a film formation condition, and thus the pause needs to be included at least after a first step of the stepwise charging process.

According to the method of producing a lithium secondary battery of the present invention, in the primary charging, pulse charging and discharging in which charging and discharging are repeated at a predetermined C-rate is performed after the stepwise charging process or between specific steps of the stepwise charging process.

When the pulse charging and discharging is performed as described above, a process of microscopically forming or decomposing a SEI film is repeated. This repetitive pulse charging and discharging may allow a SEI film to be more densely and uniformly formed on an electrode. It is favorable that the predetermined C-rate in the pulse charging and discharging is lower than the maximum C-rate in the stepwise charging process, but the present invention is not limited thereto. **In** order to perform faster charging and discharging and also rapidly reach a high SOC, in some cases, charging and discharging may proceed at a higher charging current than the maximum C-rate in the stepwise charging process. However, in any cases, it is necessary to perform charging up to an SOC value less than or equal to the maximum SOC (e.g., 70% or less) of an activation process.

Meanwhile, it is preferable that each charging and discharging time in the pulse charging and discharging is also shorter than the duration of each step in the stepwise charging process. This is because, since the pulse charging and discharging is intended for further stabilization by microscopically forming and decomposing the SEI film formed in the stepwise charging process, when the duration of the pulse charging and discharging is longer than that of the stepwise charging process, the micro-behavior of the SEI film may be broken to degrade film stability. The pulse charging and discharging may be performed after a series of steps of the stepwise charging process, but it is also possible to perform the pulse charging and discharging between specific steps of the stepwise charging process as necessary.

As described above, when the pulse charging and discharging is performed in the primary charging in addition to the stepwise charging, a SEI film is further stabilized, and thus a gas generation amount of a battery cell can be further reduced as described below.

A charging pause for stabilizing a SEI film may be included at least once between specific steps of the stepwise charging process, between the stepwise charging process and the pulse charging and discharging, or after the pulse charging and discharging. The duration of the pause may be appropriately determined according to the type and amount of an additive, the type and amount of an electrolyte, and the like. For example, the pause may last for an appropriate time in a time range of 1 to 10 minutes.

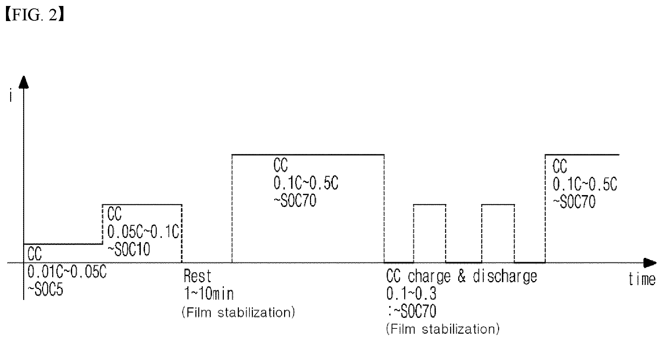

FIG. 2 is a graph showing an example of the primary charging of step (c) in a method of producing a lithium secondary battery according to an embodiment of the present invention according to a charging current and time.

As shown in FIG. 2, the stepwise charging may be firstly performed by gradually increasing a C-rate in a low current C-rate range of 0.01 to 0.5C from SOC 0% to SOC 70% in the primary charging. In the first charging step of the stepwise charging, the C-rate may be selected in a low charging current range of 0.01C to 0.05C as described above, and charging proceeds up to SOC 5%. Next, charging is performed by increasing a charging current in a relatively higher C-rate range of 0.05 to 0.1C up to SOC 10%. Then, charging may proceed at a C-rate of 0.1 to 0.5C, which is relatively higher than that in the second charging step, up to SOC 70%. In this embodiment, a pause section is included between the second charging step and the third charging step to stabilize a film. In an embodiment of the present invention, the primary charging is terminated with the stepwise charging, and then a degassing process may be performed.

However, in an embodiment shown in FIG. 2, after the stepwise charging, pulse charging and discharging in which charging and discharging are repeated at a charging current of 0.1 to 0.3C in an SOC range of 0 to 70% is performed to achieve film stabilization.

Afterward, as shown in FIG. 2, the stepwise charging may proceed again at a higher C-rate than charging current in the pulse charging and discharging (e.g., at the same C-rate as charging current in the third charging step) up to SOC 70%.

Since the primary charging in the manner shown in FIG. 2 is one exemplary embodiment, various types of modified stepwise charging or modified stepwise charging & pulse charging and discharging may be performed in a range capable of stably, more uniformly, and densely forming and maintaining a SEI film.

In step (d), the primary charged battery cell is degassed to remove gas inside the battery cell. In order to remove gas, the degassing may be performed by opening an electrolyte inlet of a battery case in the primary charging. Alternatively, when a pouch-type battery cell is used, the degassing process may include a process of discharging gas through an outlet formed in a portion (gas pocket) of a battery case and fusing the outlet. As described above, the degassing process is capable of removing gas generated during the primary charging, but when a large amount of gas is generated, gas is not completely discharged, and thus some gas may remain in a battery cell. Therefore, the present invention employs a method of reducing a gas generation amount through the stepwise charging or the stepwise charging & pulse charging and discharging as described above at the beginning. Also, although gas is discharged in the degassing process, when gas is generated due to a solvent reaction of a second electrolyte in injection of the second electrolyte as described below, the degassing process may not be performed again, and thus the gas may not be discharged. **In** the present invention, since a SEI film is formed so as to uniformly cover an electrode in the primary charging by including the additive for forming a SEI film in the injection of the first electrolyte, and particularly, the SEI film is more densely and uniformly formed by the stepwise charging or the stepwise charging & pulse charging and discharging, a solvent reaction caused by injecting a second electrolyte is suppressed by the SEI film as much as possible, and thus a gas generation amount is further reduced.

Referring to FIG. 1 again, in step (e) of the method of producing a lithium secondary battery according to the present invention, a second electrolyte not including an additive for forming a SEI film is injected into the degassed battery cell.

The total amount of the first electrolyte and the second electrolyte is determined to be a set value required for charging and discharging a battery cell as a product. As described above, the second electrolyte may be used in a weight ratio of 60 to 80% relative to the first electrolyte (20 to 40%). Since the SEI film is uniformly and stably formed due to the additive of the first electrolyte, an additive for forming a SEI film is not included in the second electrolyte. Therefore, even when a larger amount of the second electrolyte is injected compared to the first electrolyte as described above, the SEI film may prevent a reaction between the electrode and the second electrolyte to reduce a gas generation amount.

The second electrolyte includes a non-aqueous organic solvent and a lithium salt. The non-aqueous organic solvent and lithium salt of the second electrolyte may be the same as or different from the organic solvent and lithium salt included in the first electrolyte.

As an embodiment, after the injection of the second electrolyte, aging may be further performed for impregnation of the second electrolyte and film stabilization.

Since the SEI film is uniformly and robustly formed by the above-described process, the aging may be performed at a higher temperature than that in the pre-aging. Alternatively, the aging may be repeatedly performed at room temperature and a high temperature. When aging is performed at a high temperature, for example, when the battery cell was allowed to stand at a high temperature of 45 to 60 °C for a half-day or 1 to 2 days, a SEI film may be further stabilized by thermal energy and electrochemical energy and uniformly formed with a uniform thickness without partiality.

The battery which has been subjected to the high-temperature aging is secondarily charged, for example, at a charging current of 0.2 to 1C until 100% of designed battery capacity is reached. That is, charging as much as the capacity (SOC) remaining after the primary charging may be performed.

A lithium secondary battery may be produced by the above-described method of producing a lithium secondary battery, and therefore, the present invention provides a lithium secondary battery produced by the above-described method.

The lithium secondary battery according to the present invention is preferably used not only in a battery cell used as a power source of small-sized devices but also as a unit cell of a medium-to-large-sized battery module including a plurality of battery cells.

Preferred examples of the medium-to-large-sized devices include electric vehicles, hybrid electric vehicles, plug-in hybrid electric vehicles, power storage systems, and the like, but the present invention is not limited thereto.

Hereinafter, examples and experimental examples will be described for more specifically describing the present invention, but the present invention is not limited to the following examples and experimental examples.

### Examples

### Preparation Example of battery

97 parts by weight of Li[Ni_{0.6}Mn_{0.2}Co_{0.2}]O₂ that functions as a positive electrode active material, 1.5 parts by weight of graphite that functions as a conductive material, and 1.5 parts by weight of polyvinylidene fluoride (PVdF) that functions as a binder were mixed to prepare a positive electrode mixture. The obtained positive electrode mixture was dispersed in N-methyl-2-pyrrolidone that functions as a solvent to prepare a positive electrode slurry. The slurry was applied onto both surfaces of a 20 µm-thick aluminum foil as a positive electrode current collector, dried, and pressed to manufacture a positive electrode.

96.5 parts by weight of artificial graphite and natural graphite (weight ratio: 90:10) that function as negative electrode active materials, 2 parts by weight of styrene butadiene rubber (SBR) that functions as a binder, and 1.5 parts by weight of carboxymethylcellulose (CMC) were mixed to prepare a negative electrode mixture. The negative electrode mixture was dispersed in ion exchanged water that functions as a solvent to prepare a negative electrode slurry. The slurry was applied onto both surfaces of a 20 µm-thick copper foil as a negative electrode current collector, dried, and pressed to manufacture a negative electrode.

A porous polyethylene separator was interposed between the above manufactured positive electrode and negative electrode, and the resultant was accommodated in a pouch-type case to produce a battery cell.

### Example 1

An electrolyte in which 1M LiPF₆ was dissolved in a solvent obtained by mixing ethylene carbonate (EC) and ethyl methyl carbonate (EMC) in a volume ratio of 30:70 was prepared as a first electrolyte, wherein vinylene carbonate (based on a carbonate) and propane sultone (based on sulfur) as additives for forming a SEI film were included each in an amount of 3 wt% with respect to the total weight of the first and second electrolytes in the electrolyte.

The first electrolyte was injected into the battery of Preparation Example, and the resulting battery was pre-aged at room temperature for 2 days.

Afterward, the battery cell was subjected to three-step charging including a first charging step at 0.01C up to SOC 0 to 2%, a second charging step at 0.1C up to SOC 2 to 5%, and a third charging step at 0.2C up to SOC 5 to 70% while gradually increasing charging current and SOC. A pause for a minute was included between the second charging step and the third charging step.

A pressure of 5 kgf/cm² was applied to the primary charged battery cell to remove gas, and a second electrolyte including the same organic solvent and lithium salt as those of the first electrolyte was injected into the battery case. A weight ratio of the first electrolyte and the second electrolyte was 30:70.

The second electrolyte was injected, and the resultant was aged at room temperature for 12 hours and at 60 °C for 12 hours to produce a lithium secondary battery.

### Example 2

A battery cell of Example 2 was produced in the same manner as in Example 1 except for the primary charging conditions. That is, the battery cell was subjected to a first charging step at 0.01C up to SOC 0 to 2% and a second charging step at 0.1C up to SOC 2 to 5% and then paused for a minute. Afterward, the battery cell was subjected to pulse charging and discharging in which charging and discharging were repeated 5 times at 0.1C in a SOC range of 0 to 5% and then paused for a minute. Finally, the battery cell was charged again at 0.2C from SOC 5% to SOC 70%.

A lithium secondary battery of Example 2 was produced under the same conditions for gas removal after primary charging, second electrolyte injection, and aging as in Example 1.

### Comparative Example 1

A battery cell of Comparative Example 1 was produced under the same conditions as in Example 1 except that different primary charging conditions were applied to the battery cell of Preparation Example. In Comparative Example 1, primary charging was performed at a charging current of 0.2C (constant current) up to SOC 70% without performing the stepwise charging as in Example 1 and the stepwise charging & pulse charging and discharging as in Example 2.

### Experimental Example 1: Comparison of gas generation amount of battery cell

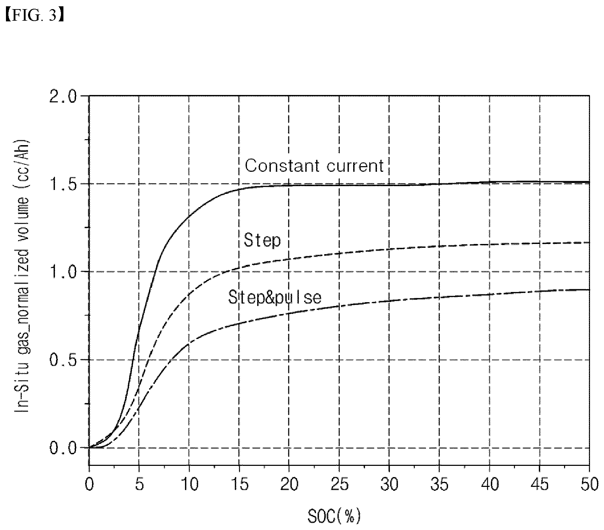

When each battery cell of Examples 1 and 2 and Comparative Example 1 was immersed in a water tank containing silicone oil and charged in real time under the same conditions, gas was generated, and thus the volume of the battery cell was changed. This volume change was measured by a buoyancy measurement method. The gas volume was calculated by inverse calculation from the weight reduced due to the generation of buoyancy and is shown in FIG. 3.

Referring to FIG. 3, in the case of the battery cell of Comparative Example 1 in which primary charging at a constant current was performed, it can be confirmed that a large amount of gas was generated according to an SOC increase even when the first electrolyte and the second electrolyte were separately injected. On the other hand, in the case of the battery cell of Example 1 in which both separate injection and stepwise charging were performed, it can be confirmed that a smaller amount of gas was generated than in Comparative Example 1. Also, in the case of the battery cell of Example 2 in which all of separate injection, stepwise charging, and pulse charging and discharging were performed, it can be confirmed that the smallest amount of gas was generated. As shown in FIG. 3, all of the battery cells showed that, when a maximum gas generation amount was reached, the amount of generated gas became saturated as the SOC increases.

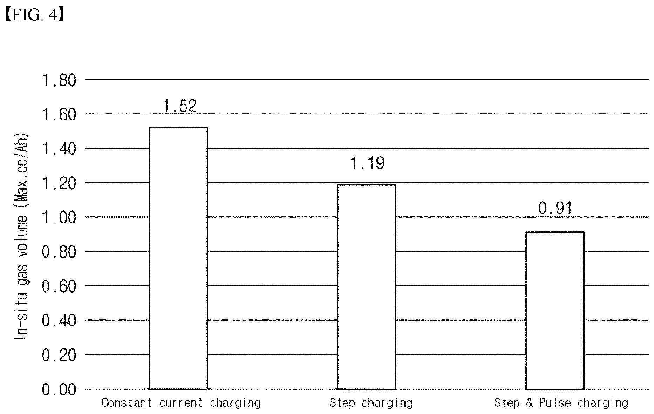

FIG. 4 is a graph showing the comparison of maximum gas generation amounts of Examples 1 and 2 and Comparative Example 1.

It can be confirmed that a maximum gas generation amount also decreased in the order of constant current charging, stepwise charging, and stepwise charging & pulse charging and discharging.

From these results, it can be seen that a SEI film is more robustly and densely formed or stabilized by combining separate injection and stepwise charging or by combining separate injection and stepwise charging & pulse charging and discharging, and thus the amount of gas generated by a solvent reaction between the electrolyte and the electrode can be substantially reduced.

### Experimental Example 2: Comparison of impedance of battery cell

Each battery cell of Examples 1 and 2 and Comparative Example 1 was charged at a constant current of 0.2 C and a constant voltage (CC-CV) up to SOC 100% and SOC 20% to produce a final battery cell.

The impedance of the battery cell was measured by inputting alternating current signals of various frequencies using an impedance analyzer.

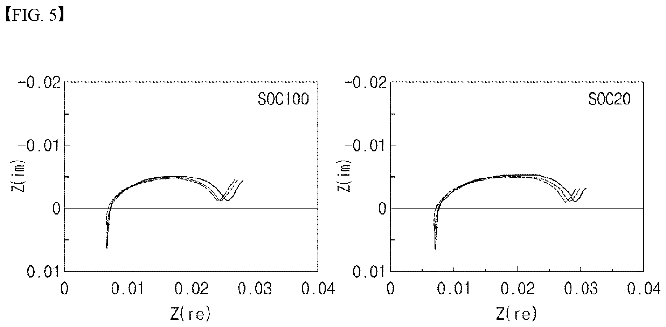

FIG. 5 is a graph showing the impedance measurement data for each frequency of the final battery cells produced according to Examples 1 and 2 and Comparative Example 1. The impedance analyzer measures the impedance of the battery cell for each frequency using electrochemical impedance spectroscopy (EIS) under a plurality of predetermined frequency conditions. The frequency condition of the EIS impedance analyzer was 0.01 to 10,000 Hz, and the amplitude was 5 to 10 mV.

As shown in FIG. 5, it can be confirmed that the impedance of the battery cell of Example 1 in which stepwise charging was performed was lower than that of Comparative Example 1 in which charging at a constant current was performed, and the impedance of Example 2 was lower than that of Example 1.

It is speculated that, since a more uniform and denser SEI film is formed by separate injection and stepwise charging and by separate injection and stepwise charging & pulse charging and discharging, the resistance (impedance) value of the battery cell also decreases.

## Claims

1. A method of producing a lithium secondary battery, comprising:
(a) injecting a first electrolyte including an additive for forming a solid electrolyte interface (SEI) film into a battery cell in which an electrode assembly including a positive electrode, a negative electrode, and a separator interposed between the positive electrode and the negative electrode is accommodated in a battery case;
(b) pre-aging the battery cell containing the first electrolyte injected thereinto;
(c) primary charging the pre-aged battery cell so that a predetermined state of charge (SOC) is reached to activate the battery cell;
(d) degassing the primary charged battery cell to remove gas inside the battery cell; and
(e) injecting a second electrolyte not including the additive for forming a SEI film into the degassed battery cell,
wherein the primary charging includes a stepwise charging process performed by gradually increasing the magnitude of a charging current according to the SOC of the battery cell, and
wherein, in the primary charging, pulse charging and discharging in which charging and discharging are repeated at a predetermined C-rate is performed after the stepwise charging process or between specific steps of the stepwise charging process.

2. The method of claim 1, wherein the first electrolyte includes a non-aqueous organic solvent and a lithium salt.

3. The method of claim 2, wherein the non-aqueous organic solvent is one or a mixture of two or more selected from the group consisting of a cyclic carbonate, a linear carbonate, an ester, an ether, and a ketone.

4. The method of claim 2, wherein the lithium salt is one or a mixture of two or more selected from the group consisting of LiPF₆, LiAsF₆, LiCF₃SO₃, LiN(CF₃SO₂)₂, LiBF₄, LiBF₆, LiSbF₆, LiN(C₂F₅SO₂)₂, LiAlO₄, LiAlCl₄, LiSO₃CF₃, and LiClO₄.

5. The method of claim 1, wherein the additive for forming a SEI film is one or a mixture of two or more selected from the group consisting of vinylene carbonate (VC), vinyl ethylene carbonate (VEC), fluoroethylene carbonate (FEC), cyclic sulfite, saturated sultone, unsaturated sultone, non-cyclic sulfone, lithium oxalyldifluoroborate (LiODFB), and a derivative thereof.

6. The method of claim 1, wherein the additive for forming a SEI film is included in an amount of 0.1 to 10 wt% with respect to the total weight of the first electrolyte.

7. The method of claim 1, wherein the second electrolyte includes a non-aqueous solvent and a lithium salt, and
the non-aqueous solvent and lithium salt of the second electrolyte are the same as or different from the non-aqueous solvent and lithium salt included in the first electrolyte.

8. The method of claim 1, wherein a weight ratio of the first electrolyte and the second electrolyte is 20:80 to 40:60.

9. The method of claim 1, wherein a charging current in the stepwise charging process is selected in a low current range of 0.01 to 0.5C.

10. The method of claim 9, wherein a charging current in a first step of the stepwise charging process is selected in a low current range of 0.01 to 0.05C.

11. The method of claim 1, wherein the predetermined SOC is 70% or less.

12. The method of claim 1, wherein a charging pause for stabilizing a SEI film is included at least once between specific steps of the stepwise charging process.

13. The method of claim 1, wherein a charging pause for stabilizing a SEI film is included at least once between specific steps of the stepwise charging process, between the stepwise charging process and the pulse charging and discharging, or after the pulse charging and discharging.

14. The method of claim 1, further comprising, after the step (e), aging the battery cell by maintaining the battery cell at room temperature and/or a high temperature for a predetermined time.

## Patentansprüche

1. Verfahren zur Herstellung einer Lithium-Sekundärbatterie, umfassend:
(a) Injizieren eines ersten Elektrolyten, der ein Additiv zur Bildung eines Festelektrolyt-Grenzflächenfilms (SEI-Films) enthält, in eine Batteriezelle, in der eine Elektrodenanordnung, die eine positive Elektrode, eine negative Elektrode und einen zwischen der positiven Elektrode und der negativen Elektrode angeordneten Separator enthält, in einem Batteriegehäuse untergebracht ist;
(b) Voraltern der Batteriezelle, die den darin injizierten ersten Elektrolyten enthält;
(c) primäres Laden der vorgealterten Batteriezelle, so dass ein vorbestimmter Ladezustand (SOC) erreicht wird, um die Batteriezelle zu aktivieren;
(d) Entgasen der primär geladenen Batteriezelle, um Gas im Inneren der Batteriezelle zu entfernen; und
(e) Injizieren eines zweiten Elektrolyten, der das Additiv zur Bildung eines SEI-Films nicht enthält, in die entgaste Batteriezelle,
wobei das primäre Laden einen schrittweisen Ladeprozess enthält, der durch allmähliches Erhöhen der Größe eines Ladestroms gemäß dem SOC der Batteriezelle durchgeführt wird, und
wobei beim primären Laden ein Impulsladen und -entladen, bei dem das Laden und Entladen mit einer vorbestimmten C-Rate wiederholt werden, nach dem schrittweisen Ladeprozess oder zwischen spezifischen Schritten des schrittweisen Ladeprozesses durchgeführt wird.

2. Verfahren nach Anspruch 1, wobei der erste Elektrolyt ein nichtwässriges organisches Lösungsmittel und ein Lithiumsalz enthält.

3. Verfahren nach Anspruch 2, wobei das nichtwässrige organische Lösungsmittel eines oder eine Mischung von zwei oder mehr ist, ausgewählt aus der Gruppe bestehend aus einem cyclischen Carbonat, einem linearen Carbonat, einem Ester, einem Ether und einem Keton.

4. Verfahren nach Anspruch 2, wobei das Lithiumsalz eines oder eine Mischung von zwei oder mehr ist, ausgewählt aus der Gruppe bestehend aus LiPF₆, LiAsF₆, LiCF₃SO₃, LiN(CF₃SO₂)₂, LiBF₄, LiBF₆, LiSbF₆, LiN(C₂F₅SO₂)₂, LiAlO₄, LiAlCl₄, LiSO₃CF₃ und LiClO₄.

5. Verfahren nach Anspruch 1, wobei das Additiv zur Bildung eines SEI-Films eines oder eine Mischung von zwei oder mehr ist, ausgewählt aus der Gruppe bestehend aus Vinylencarbonat (VC), Vinylethylencarbonat (VEC), Fluorethylencarbonat (FEC), cyclischem Sulfit, gesättigtem Sulton, ungesättigtem Sulton, nichtcyclischem Sulfon, Lithiumoxalyldifluorborat (LiODFB) und einem Derivat davon.

6. Verfahren nach Anspruch 1, wobei das Additiv zur Bildung eines SEI-Films in einer Menge von 0,1 bis 10 Gew.-%, bezogen auf das Gesamtgewicht des ersten Elektrolyten, enthalten ist.

7. Verfahren nach Anspruch 1, wobei der zweite Elektrolyt ein nichtwässriges Lösungsmittel und ein Lithiumsalz enthält, und
das nichtwässrige Lösungsmittel und das Lithiumsalz des zweiten Elektrolyten gleich oder verschieden von dem nichtwässrigen Lösungsmittel und dem Lithiumsalz sind, die in dem ersten Elektrolyten enthalten sind.

8. Verfahren nach Anspruch 1, wobei ein Gewichtsverhältnis des ersten Elektrolyten und des zweiten Elektrolyten 20:80 bis 40:60 beträgt.

9. Verfahren nach Anspruch 1, wobei ein Ladestrom beim schrittweisen Ladeprozess in einem Niedrigstrombereich von 0,01 bis 0,5 C ausgewählt wird.

10. Verfahren nach Anspruch 9, wobei ein Ladestrom in einem ersten Schritt des schrittweisen Ladeprozesses in einem Niedrigstrombereich von 0,01 bis 0,05 C ausgewählt wird.

11. Verfahren nach Anspruch 1, wobei der vorbestimmte SOC 70 % oder weniger beträgt.

12. Verfahren nach Anspruch 1, wobei eine Ladepause zur Stabilisierung eines SEI-Films mindestens einmal zwischen spezifischen Schritten des schrittweisen Ladeprozesses enthalten ist.

13. Verfahren nach Anspruch 1, wobei eine Ladepause zur Stabilisierung eines SEI-Films mindestens einmal zwischen spezifischen Schritten des schrittweisen Ladeprozesses, zwischen dem schrittweisen Ladeprozess und dem Impulsladen und -entladen oder nach dem Impulsladen und -entladen enthalten ist.

14. Verfahren nach Anspruch 1, ferner umfassend, nach dem Schritt (e), das Altern der Batteriezelle durch Halten der Batteriezelle bei Raumtemperatur und/oder einer hohen Temperatur für eine vorbestimmte Zeit.

## Revendications

1. Procédé de fabrication d'une batterie rechargeable au lithium, consistant à :
(a) injecter un premier électrolyte incluant un additif pour former un film d'interface d'électrolyte solide (SEI) dans un élément de batterie dans lequel un ensemble électrode incluant une électrode positive, une électrode négative et un séparateur interposé entre l'électrode positive et l'électrode négative, est accueilli dans un boîtier de batterie ;
(b) pré-vieillir l'élément de batterie contenant le premier électrolyte y étant injecté ;
(c) charger en primaire l'élément de batterie pré-vieilli de sorte qu'un état de charge (SOC) prédéterminé est atteint pour activer l'élément de batterie ;
(d) dégazer l'élément de batterie chargé en primaire pour retirer le gaz de l'intérieur de l'élément de batterie ; et
(e) injecter un deuxième électrolyte n'incluant pas l'additif pour former un film SEI dans l'élément de batterie dégazé,
dans lequel la charge primaire inclut un processus de charge par étapes effectué en augmentant graduellement l'amplitude d'un courant de charge selon l'état de charge (SOC) de l'élément de batterie, et
dans lequel, dans la charge primaire, la charge et la décharge d'impulsions où la charge et la décharge sont répétées à une vitesse C prédéterminée, sont effectuées après le processus de charge par étapes ou entre des étapes spécifiques du processus de charge par étapes.

2. Procédé selon la revendication 1, dans lequel le premier électrolyte inclut un solvant organique non aqueux et un sel de lithium.

3. Procédé selon la revendication 2, dans lequel le solvant organique non aqueux est un mélange de deux éléments ou plus sélectionnés dans le groupe constitué d'un carbonate cyclique, un carbonate linéaire, un ester, un éther et une cétone.

4. Procédé selon la revendication 2, dans lequel le sel de lithium est un mélange de deux éléments ou plus sélectionnés dans le groupe constitué de LiPF₆, LiAsF₆, LiCF₃SO₃, LiN(CF₃SO₂)₂, LiBF₄, LiBF₆, LiSbF₆, LiN(C₂F₅SO₂)₂, LiAlO₄, LiAlCl₄, LiSO₃CF₃ et LiClO₄.

5. Procédé selon la revendication 1, dans lequel l'additif pour former un film SEI est un mélange de deux éléments ou plus sélectionnés dans le groupe constitué de carbonate de vinylène (VC), carbonate d'éthylène vinylique (VEC), carbonate de fluoroéthylène (FEC), sulfite cyclique, sultone saturée, sultone non saturée, sulfone non cyclique, oxalyldifluoroborate de lithium (LiODFB) et un dérivé de ces derniers.

6. Procédé selon la revendication 1, dans lequel l' additif pour former un film SEI est inclus dans une quantité de 0,1 à 10 % en poids pour le poids total du premier électrolyte.

7. Procédé selon la revendication 1, dans lequel le deuxième électrolyte inclut un solvant non aqueux et un sel de lithium, et
le solvant non aqueux et le sel de lithium du deuxième électrolyte sont identiques ou différents du solvant non aqueux et du sel de lithium inclus dans le premier électrolyte.

8. Procédé selon la revendication 1, dans lequel un rapport en poids du premier électrolyte et du deuxième électrolyte est 20:80 à 40:60.

9. Procédé selon la revendication 1, dans lequel un courant de charge dans le processus de charge par étapes est sélectionné dans une plage de courant faible de 0,01 à 0,5C.

10. Procédé selon la revendication 9, dans lequel un courant de charge dans une première étape du processus de charge par étapes est sélectionné dans une plage de courant faible de 0,01 à 0,05C.

11. Procédé selon la revendication 1, dans lequel l'état de charge (SOC) prédéterminé est égal ou inférieur à 70 %.

12. Procédé selon la revendication 1, dans lequel une pause de charge pour stabiliser un film SEI est inclue au moins une fois entre des étapes spécifiques du processus de charge par étapes.

13. Procédé selon la revendication 1, dans lequel une pause de charge pour stabiliser un film SEI est inclue au moins une fois entre des étapes spécifiques du processus de charge par étapes, entre le processus de charge par étapes et la charge et la décharge d'impulsions, ou après la charge et la décharge d'impulsions.

14. Procédé selon la revendication 1, consistant en outre, après l'étape (e), à vieillir l'élément de batterie en maintenant l'élément de batterie à température ambiante et/ou à une température élevée pendant une durée prédéterminée.
